# EUROPÄISCHE PATENTSCHRIFT

(11) **EP 0 807 512 B1**
(45) Veröffentlichungstag und Bekanntmachung des Hinweises auf die Patenterteilung: **25.02.2004**
(21) Anmeldenummer: 97106041.3
(22) Anmeldetag: 12.04.1997
(51) Int. Cl.: B29C 63/02

(54) **Verfahren und Vorrichtung zur Folienbeschichtung von Werkstücken**
Method and apparatus for covering thermoplastic films on work pieces
Procédé et dispositif pour l'enrobage de pièces à usiner avec des feuilles

(30) Priorität: 17.04.1996 DE 19614962
(43) Veröffentlichungstag der Anmeldung: 19.11.1997
(73) Patentinhaber: Robert Bürkle GmbH & Co., 72231 Freudenstadt (DE)
(72) Erfinder: Bohn, Hans, 72296 Schopfloch (DE)
(74) Vertreter: Frank, Gerhard, Dipl.-Phys.

(56) Entgegenhaltungen:
- DE-A- 4 307 816
- DE-B- 1 944 332
- DE-B- 2 406 202

## Beschreibung

### Stand der Technik

Die Erfindung betrifft zunächst ein Verfahren nach dem Oberbegriff des Patentanspruchs 1, wie es beispielsweise aus der DE 43 07 816 C2 bekannt ist. Beim dortigen Verfahren wird die Folie, mit der das Werkstück beschichtet werden soll, mittels einer Heizplatte der Presse mittels Kontaktwärme gleichmäßig auf eine vorgewählte Verformtemperatur gebracht, danach wird die plastifizierte Folie durch Druckumkehr konturgetreu auf das zu beschichtende Werkstück gelegt. Bei diesem Vorgang bleibt die Wärmeeinwirkung auch auf das Werkstück durch die Wärmestrahlung der Heizplatte in gewissem Umfang bestehen, so dass während des Beschichtungsvorgangs, der die Aktivierung des Klebers auf dem vorgeleimten Werkstück mit einschließt, die der Folie entzogene Wärmemenge zumindest zum Teil durch die Wärmestrahlung der dort schwarz beschichteten Heizplatte wieder nachgeliefert werden kann. Dennoch bleibt es bei diesem Verfahren wichtig, dass die an der oberen Heizplatte, erhitzte Folie eine solch große Wärmemenge speichern kann, dass sie bei der Berührung mit dem beleimten Werkstück den aufgetragenen und abgetrockneten Leim wieder reaktiviert und so eine Verklebung mit dem Werkstück ermöglicht.

Die allgemeine Tendenz bei der Beschichtung von Werkstücken geht aber zu immer dünneren Folien, so dass die pro Flächeneinheit speicherbare Wärmemenge zwangsläufig immer geringer wird. Diese Reduzierung kann auch nur bedingt durch eine entsprechend höhere Aufheiztemperatur kompensiert werden, ohne die Folie zu beschädigen, so dass die maximal gespeicherte Wärmemenge pro Flächeneinheit in Abhängigkeit von der spezifischen Wärme des Folienmaterials, der Dichte des Folienmaterials und der maximal sinnvollen Heiztemperatur nach oben auf einen Wert begrenzt wird, der nicht mehr ausreicht, um die nötige Aktivierung der Leimschicht und damit eine sichere Verklebung zu gewährleisten, da die Folie von dem Werkstück, das üblicherweise Raumtemperatur aufweist, sehr schnell abgekühlt wird und daher ohnehin nur ein Teil der in der Folie gespeicherten Wärmemenge ausschließlich zur Aktivierung des Leimes zur Verfügung steht.

Aus der DE 24 06 202 B ist ein im Maschinenbau anzuwendendes Verfahren bekannt, bei dem zur Herstellung einer kunststoffummantelten Ventil-Absperrklappe beispielsweise ein Metallkern erwärmt werden kann und danach eine Folie an diesen angedrückt wird. Vorzugsweise wird jedoch die Folie selbst in einem Umluftofen erwärmt, um sie auf das Anpressen an den Metallkern vorzubereiten und eine einwandfreie, formschlüssige Ummantelung des Metallkems zu gewährleisten. Eine Verklebung der Folie auf dem Metallkern durch eine Leimbeschichtung ist nicht vorgesehen, das oben geschilderte Problem der Aktivierung eines Leims stellt sich daher hier nicht.

### Darstellung der Erfindung

Es ist Aufgabe der Erfindung, ein Verfahren zu schaffen, mit dem insbesondere die sichere Verklebung auch von dünnen Folien mit dem Werkstück ermöglicht wird.

Erfindungsgemäß wird diese Aufgabe gemäß dem kennzeichnenden Teil des Patentanspruchs 1 gelöst.

Der Grundgedanke der Erfindung besteht somit darin, die zur Aktivierung des Leimauftrags erforderliche Wärmemenge zumindest zum Teil nicht durch die Folie, sondern durch das Werkstück zur Verfügung zu stellen, unabhängig davon, ob die Leimschicht auf dem Werkstück oder auf der Folienrückseite aufgebracht ist.

Zweckmäßigerweise kann im ersten Fall die Vorwärmtemperatur des Werkstücks so gewählt werden, dass die Temperatur der Leimschicht knapp unterhalb der Aktivierungstemperatur des verwendeten Leimauftrages liegt, so dass die für die Wärmeleitung von der erwärmten Folie in das Werkstück maßgebende Temperaturdifferenz wesentlich erniedrigt wird und somit der größte Teil der in der unbeleimten Folie gespeicherten Wärmemenge nicht mehr unnötigerweise zur Erwärmung des Werkstückes verwendet werden muss, sondern praktisch vollständig zur Aktivierung des Leims herangezogen wird. Es ist natürlich auch möglich, die Aufheizung des Werkstückes so zu steuern, dass die zur Aktivierung der Beleimungsschicht erforderliche Wärmemenge kurz vor dem Auflegen einer nicht erwärmten Folie zur Verfügung gestellt wird und somit die sichere Verklebung erreicht wird. Letzteres Verfahren bietet sich allerdings nur dann an, wenn es sich um im wesentlichen plane Werkstücke handelt, die eine Verformung der Folie selbst, beispielsweise um Ecken oder Rundungen, nicht erforderlich macht, da hierbei die Plastifizierung und leichtere Verformbarkeit der Folie selbst erforderlich ist.

Ist im zweiten Fall die Leimschicht auf der Folienrückseite angebracht, wird der Leim beim Aufheizen der Folie an der Heizplatte aktiviert; beim Aufziehen auf das unbeleimte, vorgeheizte Werkstück ist sichergestellt, dass eine schnelle Abkühlung der Leimschicht verhindert wird und somit eine einwandfreie Verklebung stattfindet.

Zur Aufheizung des Werkstückes sieht die Erfindung vor, dass die gewünschte kurzfristige, d.h. innerhalb von Minutenbruchteilen erfolgende, gleichmäßige Erwärmung des Werkstückes durch Mikrowellenstrahlung erfolgt.

Insbesondere bei der Erwärmung des Werkstückes innerhalb der Presse ermöglicht diese Strahlungsart eine Anordnung eines oder mehrerer geeigneter Mikrowellengeneratoren an einer konstruktiv geeigneten Stelle, insbesondere auch oberhalb der Folie, da Kunststofffolien durch Mikrowellenstrahlung praktisch nicht aufgeheizt werden.

Eine Mikrowellenstrahlung kann also die Folie nahezu vollständig durchdringen und auf das Werkstück treffen, wobei das gesamte Werkstück durch diesen spezifischen Erwärmungsvorgang von innen heraus gleichmäßig erwärmt wird, so dass auch gewährleistet ist, dass nach einer Beendigung der Heizung keine schnelle Abkühlung des Werkstückes erfolgen kann.

Mit dieser Konzeption ist damit die Möglichkeit geschaffen, trotz räumlicher Zuordnung von Heizplatte und Mikrowellengenerator eine separate Aufheizung von Folie und Werkstück vorzunehmen. Die Wahl der temperaturbestimmenden Parameter sowohl für die Aufheizung der Folie (Temperatur der Heizplatte, Dauer des Kontaktes der Folie mit der Heizplatte) einerseits und für die Aufheizung des Werkstückes (Beginn der Aufheizung, Dauer der Aufheizung, Leistung der Mikrowellengeneratoren) können daher so aufeinander abgestimmt werden, dass beim Auflegen der erwärmten Folie auf das Werkstück auch dieses zumindest soweit erwärmt ist, dass die Aktivierung des Leims über einen ausreichenden Zeitraum gewährleistet bleibt.

Die vollständige, homogene Vorwärmung des Werkstückes bringt außerdem den Vorteil mit sich, dass die Temperatur der Folie auf dem Werkstück nur sehr viel langsamer absinkt als beim gattungsgemäßen Verfahren, so dass die Formbarkeit der Folie länger erhalten bleibt, was insbesondere bei der Qualität von Beschichtungsvorgängen an scharfkantigen Ausformungen wie Kanten oder Hinterschneidungen bemerkbar ist; außerdem sind wesentliche Reduzierungen der Zykluszeiten erreichbar, z.B. eine Halbierung der Verarbeitungszeiten (Vorwärmzeit für die Folie und Presszeit), wie Versuche ergeben haben.

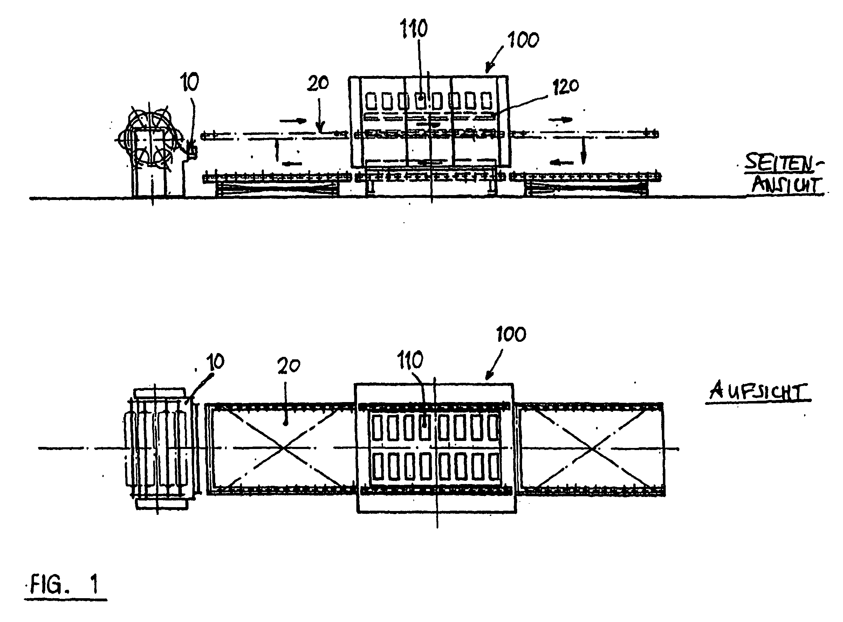

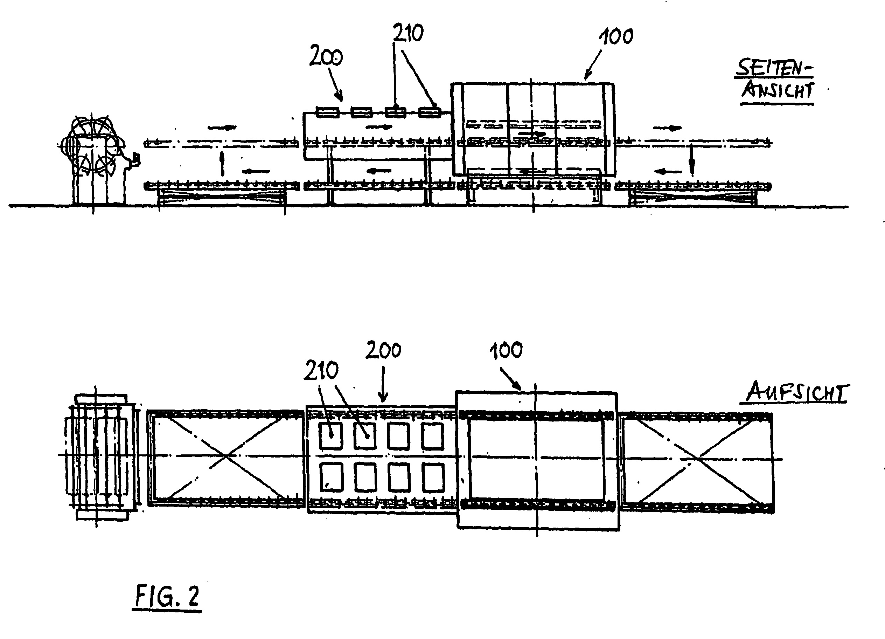

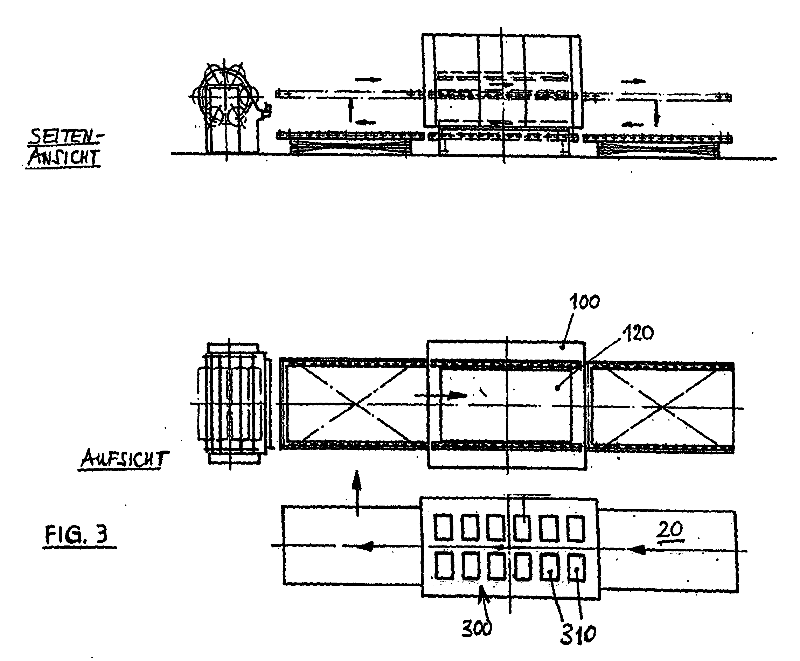

Außer der oben beschriebenen Erwärmungsmethode, wo sowohl die Erwärmung der Folie 10 mittels Mikrowellengeneratoren 110 als auch des Werkstükkes 20 mittels Heizplatte 120 innerhalb der Presse 100 erfolgt (Figur 1), ist es natürlich auch möglich, der Presse 100 einen Mikrowellen-Heizofen 200 mit Mikrowellengeneratoren 210 vorzuschalten und dort entweder die bereits fertig gerichtete Transport- und Dichtpalette mit darüber gelegter Folie der Mikrowellenstrahlung zu unterziehen (Figur 2), da die Folie durch die Mikrowellen ohnehin nicht wesentlich aufgeheizt wird, oder aber auch einen Arbeitsschritt früher lediglich das Werkstück 20 allein einen Mikrowellen-Heizofen 300 mit Mikrowellengeneratoren 310 durchlaufen zu lassen (Figur 3) und dann die Folie über dem erwärmten Werkstück erst in der Transport und Dichtpalette aufzulegen. In beiden letztgenannten Fällen erfolgt dass das Einfahren in die Presse 100 mit dem vorgewärmten Werkstück 20, wobei der hierbei auftretende Zeitverlust insofern keine große Rolle spielt, als die Wärmespeicherfähigkeit des Werkstükkes infolge der durchdringenden Erwärmung durch die Mikrowellenstrahlung sehr groß ist und somit nur ein geringer Temperaturabfall bis zum Aufziehen der Folie auf das Werkstück in der Presse eintritt.

Der Aufbau einer zur Durchführung des Verfahrens geeigneten Presse kann so gewählt sein wie bei der DE 43 07 816 C2 (wobei natürlich die dort vorgesehene schwarze Beschichtung der Heizplatte nicht erforderlich ist). Beispielsweise kann eine Anordnung von Mikrowellengeneratoren 110,210 in der Heizplatte 120 integriert sein, wobei die einfachste Möglichkeit darin besteht, die Heizplatte 120 aus mikrowellen-durchlässigem Material (z.B. CERAN®) auszubilden, und eine Vielzahl von Mikrowellengeneratoren 110,210 hinter der Heizplatte 120 zu installieren, so dass es keiner weiteren Beschreibung des apparativen Aufbaus einer geeigneten Presse zur Durchführung des Verfahrens bedarf. Die Peripheriegeräte sind aus den Darstellungen der Figuren 1 bis 3 in ihrem prinzipiellen Aufbau und ihren möglichen Zuordnungen entnehmbar, und (bis auf den Mikrowellen-Heizofen) allgemein bekannt.

## Patentansprüche

1. Verfahren zur Folienbeschichtung von Werkstücken, bei dem in einer Presse (100) die Folie (10) unter Anwendung von Wärme und Druck und/oder Unterdruck auf das zu beschichtende Werkstück (20) gezogen und dort verklebt wird, **dadurch gekennzeichnet, dass** die zur Verklebung der Folie (10) mit dem Werkstück (20) erforderliche Wärmemenge zumindest zum Teil durch eine kurzfristig erreichbare, weitgehend vollständige Erwärmung des gesamten Werkstücks (20) durch Mikrowellenstrahlung vor dem Auflegen der Folie (10) zur Verfügung gestellt wird.

2. Verfahren nach Anspruch 1, **dadurch gekennzeichnet, dass** eine rückseitig beleimte Folie (10) auf ein unbeleimtes Werkstück (20) aufgezogen wird.

3. Verfahren nach Anspruch 1, **dadurch gekennzeichnet, dass** eine unbeleimte Folie (10) auf ein beleimtes Werkstück (20) aufgezogen wird.

4. Verfahren nach Anspruch 1, **dadurch gekennzeichnet, dass** die Erwärmung der Folie (10) durch Kontakt mit einer Heizplatte (120) der Presse (100) und die Erwärmung des Werkstücks (20) durch Mikrowellenstrahlung innerhalb der Presse (100) erfolgt.

5. Verfahren nach Anspruch 1, **dadurch gekennzeichnet, dass** der Aufheizvorgang des Werkstücks (20) und eine zusätzliche Erwärmung der Folie (10) hinsichtlich der jeweiligen temperaturbestimmenden Parameter, z.B. Wärmekapazität, Heizleistung, Heizdauer, so aufeinander abgestimmt werden, dass beim Auflegen der erwärmten Folie (10) auf das Werkstück (20) dieses zumindest so erwärmt ist, dass eine sichere Aktivierung des Leims gewährleistet ist.

6. Verfahren nach Anspruch 1, **dadurch gekennzeichnet, dass** zumindest das Werkstück (20) mit oder ohne Folie (10) außerhalb der Presse (100) aufgeheizt wird.

7. Vorrichtung zur Durchführung des Verfahrens nach Anspruch 1 bis 4, **dadurch gekennzeichnet, dass** in der Ebene der Heizplatte (120) oder darüber mindestens ein Mikrowellengenerator (110) angeordnet ist, dessen Strahlungsleistung durch die Folie (10) auf das Werkstück (20) abgestrahlt wird.

## Claims

1. Method for coating workpieces with a film, where, in a press (100), the film (10) is drawn onto the workpiece (20) to be coated under the application of heat and pressure and/or reduced pressure and is bonded thereto, **characterised in that** the amount of heat necessary to bond the film (10) to the workpiece (20) is made available at least partially by means of heating the entire workpiece (20) through microwave radiation before the film (10) is applied, said heating being achievable in the short-term and being substantially all that is required.

2. Method according to claim 1, **characterised in that** a film (10), which is glued on the back, is drawn onto a workpiece (20), which is not glued.

3. Method according to claim 1, **characterised in that** a film (10), which is not glued, is drawn onto a workpiece (20), which is glued.

4. Method according to claim 1, **characterised in that** the heating of the film (10) is effected by means of contact with a heating plate (120) of the press (100) and the heating of the workpiece (20) is effected by means of microwave radiation internally of the press (100).

5. Method according to claim 1, **characterised in that** the process of heating-up the workpiece (20) and an additional heating of the film (10) are adapted to each other, with regard to the respective parameters determined by the temperature, e.g. heat storage capacity, heating power, heat duration, in such a manner that when the heated film (10) is applied to the workpiece (20), this workpiece (20) is at least heated in such a manner that a reliable activation of the glue is guaranteed.

6. Method according to claim 1, **characterised in that** at least the workpiece (20) with or without film (10) is heated up externally of the press (100).

7. Apparatus for accomplishing the method according to claim 1 to 4, **characterised in that** at least one microwave generator (110) is disposed in the plane of the hot plate (120) or thereabove, the radiant power of which microwave generator (110) is emitted through the film (10) onto the workpiece (20).

## Revendications

1. Procédé pour le revêtement de pièces d'oeuvre avec des feuilles, dans lequel dans une presse (100) on étend la feuille (10) sur la pièce d'oeuvre à revêtir (20) et on l'y colle, en utilisant de la chaleur et de la pression et/ou dépression,
**caractérisé en ce qu'**on fournit la quantité de chaleur nécessaire au collage de la feuille (10) avec la pièce d'oeuvre (20) au moins en partie par un échauffement sensiblement complet, rapidement réalisable, de l'ensemble de la pièce d'oeuvre (20) par rayonnement à micro-ondes avant application de la feuille (10).

2. Procédé selon la revendication 1, **caractérisé en ce qu'**on étend sur une pièce d'oeuvre (20) non encollée une feuille (10) encollée du côté dorsal.

3. Procédé selon la revendication 1, **caractérisé en ce qu'**on étend sur une pièce d'oeuvre (20) encollée une feuille (10) non encollée.

4. Procédé selon la revendication 1, **caractérisé en ce que** l'échauffement de la feuille (10) s'effectue par contact avec une plaque chauffante (120) de la presse (100) et l'échauffement de la pièce d'oeuvre (20) par rayonnement à micro-ondes à l'intérieur de la presse (100).

5. Procédé selon la revendication 1, **caractérisé en ce que** le processus d'échauffement de la pièce d'oeuvre (20) et un échauffement additionnel de la feuille (10) sont accordés l'un à l'autre au regard des paramètres respectifs déterminants pour la température, par exemple capacité thermique, puissance de chauffe, durée de chauffe, de telle manière que lors de l'application de la feuille échauffée (10) sur la pièce d'oeuvre (20) cette dernière soit au moins échauffée de façon à garantir une activation fiable de la colle.

6. Procédé selon la revendication 1, **caractérisé en ce qu'**au moins la pièce d'oeuvre (20) est échauffée en-dehors de la presse (100), avec ou sans la feuille (10).

7. Dispositif pour la mise en oeuvre du procédé selon revendication 1 à 4, **caractérisé en ce qu'**au moins un générateur de micro-ondes (110) est disposé dans le plan de la plaque chauffante (120) ou au-dessus, sa puissance de rayonnement étant émise sur la pièce d'oeuvre (20) à travers la feuille (10).
